(19) Europäisches Patentamt
European Patent Office
Office européen des brevets

(11) Veröffentlichungsnummer: **0 267 517**
**A2**

(12) # EUROPÄISCHE PATENTANMELDUNG

(21) Anmeldenummer: **87116124.6**

(51) Int. Cl.⁴: **C08G 63/68** , C10G 33/04

(22) Anmeldetag: **03.11.87**

(30) Priorität: **13.11.86 DE 3638743**

(43) Veröffentlichungstag der Anmeldung:
**18.05.88 Patentblatt 88/20**

(84) Benannte Vertragsstaaten:
**AT ~~BE CH~~ DE FR GB IT LI NL SE**

(71) Anmelder: **HOECHST AKTIENGESELLSCHAFT**
**Postfach 80 03 20**
**D-6230 Frankfurt am Main 80(DE)**

(72) Erfinder: **Böse, Willibald, Dr.**
**Rossfeldstrasse 7**
**D-8269 Burgkirchen(DE)**
Erfinder: **Hofinger, Manfred, Dr.**
**Rossfeldstrasse 7**
**D-8269 Burgkirchen(DE)**
Erfinder: **Hille, Martin, Dr.**
**In den Eichen 46**
**D-6237 Liederbach(DE)**
Erfinder: **Böhm, Roland**
**Fischbacher Strasse 29**
**D-6233 Kelkheim (Taunus)(DE)**
Erfinder: **Staiss, Friedrich**
**Odenwaldstrasse 21**
**D-6200 Wiesbaden(DE)**

(54) **Verzweigte Polyoxalkylenmischpolyester, Verfahren zu ihrer Herstellung und ihre Verwendung.**

(57) Es werden verzweigte Polyoxalkylenmischpolyester beschrieben, die hergestellt werden, indem ein oxalkyliertes primäres Fettamin und ein mindestens 3wertiges oxalkyliertes Alkanol oder ein oxalkyliertes Polyamin mit einer Dicarbonsäure oder einem Dicarbonsäureanhydrid unter Polykondensation verestert werden. Die neuen verzweigten Polyoxalkylenmischpolyester werden als Demulatoren für die Spaltung von Rohölemulsionen verwendet.

EP 0 267 517 A2

Xerox Copy Centre

## Verzweigte Polyoxalkylenmischpolyester, Verfahren zu ihrer Herstellung und ihre Verwendung

Die Erfindung betrifft verzweigte Polyoxalkylenmischpolyester, ein Verfahren zu ihrer Herstellung und ihre Verwendung als Demulgatoren für Rohölemulsionen.

Bei der Förderung von Rohölemulsionen tritt eine zunehmende Verwässerung der geförderten Rohöle ein. Dieses mitgeförderte Wasser bildet mit dem Rohöl eine Wasser-in-Öl-Emulsion. In dem emulgierten Wasser können Salze wie Natriumchlorid, Calciumchlorid und Magnesiumchlorid gelöst sein. Dieses Emulsionswasser muß vor dem Transport abgetrennt werden. In den Raffinerien wird vor der Destillation der Salzgehalt durch eine erneute Emulsionsbildung mit Süßwasser und Demulgierung weiter abgesenkt. Ein zu hoher Salzgehalt im Rohöl kann zu Störungen und Korrosion in den Raffinerien führen.

Ein Demulgator hat die Aufgabe, bei möglichst geringer Anwendungskonzentration die Emulsion zu brechen und bei diesem Separationsprozeß möglichst ohne oder mit minimaler zusätzlicher Aufwendung von Wärme eine vollständige Wasserabscheidung zu bewirken und den Salzgehalt auf ein Minimum zu reduzieren. Die Qualitätskriterien für geliefertes Rohöl sind das Restsalz und der Wassergehalt.

Die Rohöle sind je nach ihrer Provenienz unterschiedlich zusammengesetzt. Die natürlichen Emulsionsstabilisatoren besitzen einen komplizierten, differenzierten chemischen Aufbau. Zur Überwindung ihrer Wirkung müssen selektiv Spalter entwickelt werden.

Durch verschiedene Förder-und Aufbereitungsbedingungen werden die Anforderungen, die an einen Demulgator gestellt werden, noch vielfältiger. Durch das ständige Erschließen neuer Rohölfelder und die Änderung der Förderbedingungen älterer Rohölfelder bleibt die Entwicklung optimaler Demulgatoren ein akutes Problem und es werden eine große Anzahl verschiedenartig aufgebauter Demulgatoren oder Demulatormischungen benötigt.

Aus der US-Patentschrift 3 009 884 sind verzweigte Polyoxalkylenpolyester bekannt, die hergestellt worden sind, indem ein oxalkyliertes Polyamin mit einer Dicarbonsäure einfach oder unter Polykondensation verestert worden ist. Sie werden als Demulgatoren für Rohölemulsionen (Erdölspalter) empfohlen. Diese Polyester besitzen jedoch den Nachteil einer erhöhten Wasserlöslichkeit (Hydrophilie), das heißt, ihre Öllöslichkeit (Oleophilie) ist zu gering. Da aber die Wirksamkeit von Demulatoren für die Brechung von Rohölemulsionen von dem Grad der Anwesenheit an der Grenzfläche Öl/Wasser abhängt, ist diese Eigenschaft nachteilig, weil sich ein zu hoher Anteil des Demulgators über die gesamte wäßrige Phase verteilt.

Mit der vorliegenden Erfindung werden neue verzweigte Polyoxalkylenpolyester, und zwar verzweigte Polyoxalkylenmischpolyester hergestellt, die besonders wirksame Demulgatoren für Rohölemulsionen darstellen.

Die erfindungsgemäßen verzweigten Polyoxalkylenmischpolyester sind dadurch gekennzeichnet, daß sie hergestellt worden sind, indem ein oxalkyliertes primäres Fettamin der Formel

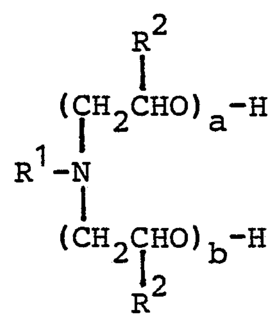

,

worin

$R^1$ ein Alkylrest oder Alkylenrest mit 8 bis 23 C-Atomen ist,

$R^2$ H oder $CH_3$ ist und innerhalb der Kette des Polyoxalkylenrestes, in Blöcken angeordnet, auch beide Bedeutungen annehmen kann, und

a und b, gleich oder verschieden, ganze oder gebrochene Zahlen von insgesamt 2 bis 30 sind,

mit der Maßgabe, daß weder a noch b Null ist, und ein mindestens 3wertiges Alkanol oder ein Polyamin, die jeweils pro acides H-Atom 5 bis 30, vorzugsweise 15 bis 25 Ethylenoxid-Einheiten, 5 bis 30, vorzugsweise 15 bis 25 Propylenoxid-Einheiten oder 3 bis 20, vorzugsweise 5 bis 15 Ethylenoxid-Einheiten und 5 bis 30, vorzugsweise 15 bis 25 Propylenoxid-Einheiten enthalten, mit einer Dicarbonsäure oder einem Dicarbonsäureanhydrid unter Polykondensation verestert worden sind, wobei das oxalkylierte Fettamin, das

oxalkylierte, mehrwertige Alkanol oder das oxalkylierte Polyamin und die Dicarbonsäure oder das Dicarbonsäureanhydrid im Molverhältnis von 1 : 0,01 : 0,5 bis 1 : 1 : 3, vorzugsweise 1 : 0,1 : 0,9 bis 1 : 0,5 : 1,5 eingesetzt worden sind.

Bevorzugte oxalkylierte, primäre Fettamine der oben angegebenen Formel sind solche, wenn $R^1$ ein Alkylrest mit 12 bis 18 C-Atomen ist, $R^2$ H ist und a und b, gleich oder verschieden, ganze oder gebrochene Zahlen von insgesamt 2 bis 15 sind, unter Berücksichtigung der oben angegebenen Maßgabe. Die Oxalkylierung von primären Fettaminen ist wohlbekannt und kann nach einer der Methoden zur Oxalkylierung von acide (aktive) H-Atome tragenden Verbindungen durchgeführt werden. Die oxalkylierten Fettamine können gemäß den Bedeutungen von $R^2$ Einheiten des Ethylenoxids oder Propylenoxids oder blockweise angeordnete Einheiten des Ethylenoxids und Propylenoxids tragen, wobei die ethoxylierten, das heißt nur Ethylenoxid-Einheiten tragenden primären Fettamine bevorzugt sind. Bei den zur Oxalkylierung eingesetzten Fettaminen kann es sich gemäß den Bedeutungen von $R^1$ um einzelne primäre Fettamine oder um Gemische davon handeln. Es kann sich auch um solche Fettamine handeln, deren Kohlenwasserstoff-Kette eine oder mehrere Doppelbindungen enthält, wie die Reste der Öl-, Elaidin-, Linol- oder Linolensäure. Die bevorzugten primären Fettamine sind die technisch verfügbaren Produkte, wie Stearylamin, Cocosfettamin oder Talgfettamin (in diesen technischen Produkten liegen Alkylreste mit im wesentlichen 12 bis 18 C-Atomen vor).

Das oxalkylierte, mindestens 3wertige Alkanol ist vorzugsweise eines aus der Gruppe bestehend aus Glycerin, Erythrit, Pentaerythrit, Trimethylolethan, Trimethylolpropan, 1,3,5-Hexantriol, Pentit und Hexit, wobei Glycerin, Pentaerythrit und Trimethylolpropan besonders bevorzugt sind. Die oxalkylierten Polyole besitzen pro acides H-Atom, das heißt pro OH-Gruppe, 5 bis 30, vorzugsweise 15 bis 25 Ethylenoxid-Einheiten oder 5 bis 30, vorzugsweise 15 bis 25 Propylenoxid-Einheiten oder 3 bis 20, vorzugsweise 5 bis 15 Ethylenoxid-Einheiten und 5 bis 30, vorzugsweise 15 bis 25 Propylenoxid-Einheiten. Im Falle von Ethylenoxid-und Propylenoxid-Einheiten sind diese statistisch oder blockweise, vorzugsweise blockweise,angelagert. Von den in Betracht kommenden oxalkylierten Alkanolen sind jene bevorzugt, die Ethylenoxid und Propylenoxid enthalten, und das blockweise. Davon sind wiederum jene Ethylenoxid-Propylenoxid-Blöcke (pro acides H-Atom) bevorzugt, die aus einem ersten Propylenoxid-Block mit 5 bis 30, vorzugsweise 15 bis 25 Propylenoxid-Einheiten und einem daran anschließenden Ethylenoxid-Block mit 3 bis 20, vorzugsweise 5 bis 15 Ethylenoxid-Einheiten bestehen.

Das oxalkylierte Polyamin ist vorzugsweise eins aus der Gruppe bestehend aus Ethylendiamin, Diethylentriamin, Triethylentetramin, Tetraethylenpentamin und Pentaethylenhexamin sowie den entsprechenden Propylenpolyaminen, wobei Ethylendiamin, Propylendiamin, Diethylentriamin, Triethylentetramin, Tetraethylenpentamin und die entsprechenden Polypropylenpolyamine besonders bevorzugt sind. Die oxalkylierten Polyamine besitzen ebenso wie die oxalkylierten Polyole pro acides H-Atom 5 bis 30, vorzugsweise 15 bis 25 Ethylenoxid-Einheiten oder 5 bis 30, vorzugsweise 15 bis 25 Propylenoxid-Einheiten oder 3 bis 20, vorzugsweise 5 bis 15 Ethylenoxid-Einheiten und 5 bis 30, vorzugsweise 15 bis 25 Propylenoxid-Einheiten. Im Falle von Ethylenoxid-und Propylenoxid-Einheiten sind diese statistisch oder blockweise, vorzugsweise blockweise, angelagert. Von den in Betracht kommenden oxalkylierten Polyaminen sind jene bevorzugt, die Ethylenoxid und Propylenoxid enthalten, und dies blockweise. Davon sind wiederum auch hier jene Ethylenoxid-Propylenoxid-Blöcke (pro acides H-Atom) bevorzugt, die aus einem ersten Propylenoxid-Block mit 5 bis 30, vorzugsweise 15 bis 25 Propylenoxid-Einheiten und einem daran anschließenden Ethylenoxid-Block mit 3 bis 20, vorzugsweise 5 bis 15 Ethylenoxid-Einheiten bestehen. Die Oxalkylierung der in Rede stehenden Polyole und Polyamine ist ebenso wie die oben erwähnte Oxalkylierung von Fettaminen wohlbekannt und kann nach einer der Methoden zur Oxalkylierung von aktive H-Atome tragenden Verbindungen durchgeführt werden.

Die einzusetzende Dicarbonsäure kann aromatischer oder aliphatischer Art sein. Die aliphatischen Dicarbonsäuren können gesättigt oder ungesättigt sein. Die aromatische Dicarbonsäure ist vorzugsweise die Phthalsäure (Benzolortho-dicarbonsäure). Die aliphatische gesättigte Dicarbonsäure ist vorzugsweise eine mit $C_1$-bis $C_8$-Alkylengruppen, insbesondere mit $C_2$-bis $C_4$-Alkylengruppen, wie Malonsäure, Bernsteinsäure, Glutarsäure, Adipinsäure, Pimelinsäure, Suberinsäure, Acelainsäure und Sebacinsäure. Die aliphatische ungesättigte Dicarbonsäure ist vorzugsweise die Fumarsäure oder die Maleinsäure. Von den genannten Dicarbonsäuren sind die aliphatischen gesättigten Dicarbonsäuren sowie die Maleinsäure bevorzugt. Bezüglich der Dicarbonsäureanhydride, die anstelle der Säuren eingesetzt werden können, gilt analog das, was bezüglich der Dicarbonsäuren gesagt worden ist.

Die Herstellung der erfindungsgemäßen Polyoxalkylenmischpolyester erfolgt dadurch, daß ein oxalkyliertes Fettamin der genannten Art und ein oxalkyliertes Alkanol oder ein oxalkyliertes Polyamin der genannten Art mit einer Dicarbonsäure oder einem Dicarbonsäureanhydrid der genannten Art verestert werden, wobei das Fettamin, das Alkanol oder das Polyamin und die Dicarbonsäure oder Dicarbonsäureanhydrid im Molverhältnis von 1 : 0,01 : 0,5 bis 1 : 1 : 3, vorzugsweise 1 : 0,1 : 0,9 bis 1 : 0,5 : 1,5,eingesetzt werden.

Die unter Polykondensation verlaufende Veresterung der oxalkylierten Fettamine und oxalkylierten Polyole oder Polyamine mit einer Dicarbonsäure oder einem Dicarbonsäureanhydrid wird unter Verwendung eines höhersiedenden, inerten Lösungsmittels, wie Toluol oder Xylol, oder ohne Lösungsmittel in der Schmelze und unter Abdeckung mit einem Schutzgas durchgeführt, wobei die Durchführung in der Schmelze bevorzugt ist. Bei Veresterung in einem Lösungsmittel wählt man als Reaktionstemperatur zweckmäßigerweise die Rückflußtemperatur des Reaktionsgemisches und entfernt das gebildete Reaktionswasser durch azeotrope Destillation. Bei Veresterung in Substanz wird das Reaktionswasser direkt aus der Reaktionsmischung ausgetragen (abdestilliert). Die Reaktionstemperaturen liegen hier bei 140 bis 220 °C, vorzugsweise 160 bis 180 °C. Zur Beschleunigung der Reaktion verwendet man, wie es bei Veresterungsreaktionen zweckmäßig ist, einen sauren Katalysator. Der Verlauf und das Ende der Reaktion kann mit Hilfe des entstehenden Reaktionswassers oder durch die Bestimmung der Amin-und Säurezahl kontrolliert werden. Die erhaltenen erfindungsgemäßen Polyalkylenmischpolyester stellen gelb bis braun gefärbte, mehr oder weniger viskose Flüssigkeiten dar.

Nachstehend wird ein bevorzugtes Verfahren zur Herstellung der neuen, verzweigten Polyoxalkylenmischpolyester näher beschrieben.

Das oxalkylierte Fettamin, das oxalkylierte Alkanol oder das oxalkylierte Polyamin und die Dicarbonsäure oder das Anhydrid sowie saurer Katalysator werden in einem Reaktionsgefäß vorgelegt. Geeignete saure Katalysatoren sind Halogenwasserstoffsäuren, wie Salzsäure oder Bromwasserstoffsäure, Phosphorsäuren, wie unterphosphorige Säure oder Orthophosphorsäure, Schwefelsäure, Sulfonsäuren, wie Methansulfonsäure, para-Toluolsulfonsäure oder Dodecylbenzolsulfonsäure, Halogenessigsäuren, wie Trichloressigsäure oder Trifluoressigsäure, und Mischungen hiervon. Bevorzugt sind die Salzsäure, Phosphorsäuren und Sulfonsäuren. Die Menge an saurem Katalysator beträgt im allgemeinen 0,05 bis 5 Gew.-%, vorzugsweise 0,1 bis 1 Gew.-%, bezogen auf die Gewichtssumme aus den vorgelegten drei Reaktionskomponenten. Die im Reaktionsgefäß vorgelegte Mischung wird unter Rühren und Durchleiten eines inerten Gases, vorzugsweise Stickstoff, zur Erzeugung einer inerten Gasatmosphäre, auf 140 bis 220 °C, vorzugsweise 160 bis 180 °C, erhitzt und bei dieser Temperatur (Reaktionstemperatur, Veresterungstemperatur) unter kontinuierlicher Austragung des entstehenden Wassers gehalten, bis die Umsetzung beendet ist. Der Verlauf und das Ende der Umsetzung kann nach einer der oben erwähnten Methoden kontrolliert werden. Das Umsetzungsprodukt, das gegebenenfalls mit Wasser zur Entfernung des eingesetzten Katalysators gewaschen werden kann, ist eine gelb bis braun gefärbte, mehr oder weniger viskose Flüssigkeit und stellt die erfindungsgemäßen verzweigten Polyoxalkylenmischpolyester dar. Die Reaktionszeit liegt im Bereich von 5 bis 30 Stunden.

Die erfindungsgemäßen verzweigten Polyoxalkylenmischpolyester mit den drei Komponenten, nämlich oxalkyliertes, mindestens dreiwertiges Alkanol oder oxalkyliertes Polyamin, oxalkyliertes Fettamin und Dicarbonsäure, weisen eine spezifische chemische Charakteristik und eine hochverzweigte Struktur auf. Sie besitzen eine Viskosität von 2000 bis 50 000 mPa • s, vorzugsweise 4000 bis 30 000 mPa • s.

Die erfindungsgemäßen verzweigten Polyoxalkylenmischpolyester zeichnen sich durch eine hohe Demulgierwirkung aus. Bei den üblichen Erdölaufbereitungstemperaturen wird schon nach kurzer Separationszeit eine vollständige Wasserabscheidung und Reduzierung des Salzgehaltes erreicht. Mit den neuen Erdölspaltern werden also bei den üblichen Aufbereitungstemperaturen nach kurzer Separationszeit abnahmespezifische Roherdöle erhalten. Die Einsatzmenge an erfindungsgemäßem Demulgator kann in weiten Grenzen variieren. Sie hängt insbesondere von der Art des Roherdöls und der Aufbereitungstemperatur ab. Die wirksame Menge beträgt im allgemeinen 5 bis 100 g pro Tonne, vorzugsweise 10 bis 50 g pro Tonne. Die neuen Spalter werden zum Zweck der besseren Dosierung und Verteilbarkeit vorzugsweise in Lösung eingesetzt. Als Lösemittel sind Wasser oder organische Lösemittel, wie Alkohole, beispielsweise Methanol, Isopropanol und Butanol, aromatische Kohlenwasserstoffe, beispielsweise Toluol und Xylol, und handelsübliche Mischungen aus höheren Aromaten geeignet.

Die Erfindung wird nun an Beispielen noch näher erläutert.

Beispiel 1

230,0 g (0,35 mol) eines (im Mittel) 10 mol Ethylenoxid enthaltenden Talgfettamins, 58,3 g (0,40 mol) Adipinsäure und 650,0 g (0,14 mol) eines Glycerinblockoxalkylates mit (im Mittel) 22,7 mol Propylenoxid als ersten Block und 5,0 mol Ethylenoxid als zweiten Block pro acides H-Atom sowie 4 ml 37 gew.-%ige Salzsäure und 1 ml 50 gew.-%ige unterphosphorige Säure als Veresterungskatalysator (das sind 0,20 Gew.-

% Salzsäure und 0,10 Gew.-% unterphosphorige Säure, Gewichtsprozente jeweils bezogen auf das vorgelegte Reaktionsgemisch aus dem ethoxylierten Talgfettamin, der Adipinsäure und dem Glycerinblockoxalkylat) wurden in einem 1-1-Dreihalskolben mit Rührer, Wasserabscheider und Innenthermometer vorgelegt. Das Molverhältnis zwischen den umzusetzenden Reaktionskomponenten, dem ethoxylierten Fettamin, dem Glycerinblockoxalkylat und der Adipinsäure, betrug also 1 : 0,4 : 1,14.
Der Kolbeninhalt wurde unter Rühren und Durchleiten von Stickstoff zur Aufrechterhaltung einer Stickstoff-Atmosphäre auf 180 °C erhitzt und bei dieser Reaktionstemperatur 20 Stunden lang unter Rühren und einem Wasserstrahlvakuum gehalten, wobei sich kontinuierlich Reaktionswasser abschied. Nach der angegebenen Reaktionszeit war die erfindungsgemäße Veresterungsreaktion beendet. Es lag ein braun gefärbtes, zähflüssiges Reaktionsprodukt vor. Der so erhaltene erfindungsgemäße verzweigte Polyoxalkylenmischpolyester ist gekennzeichnet durch eine Viskosität von 5200 mPa • s bei 25 °C.

Beispiel 2

Ansatz: 280,0 g (0,30 mol) Stearylamin mit 15 mol Ethylenoxid, 353,0 g (0,06 mol) Glycerinblockoxalkylat analog Beispiel 1 mit 22,7 mol Propylenoxid und 14 mol Ethylenoxid, 43,9 g (0,30 mol) Adipinsäure und Veresterungskata lysator wie im Beispiel 1. Das Molverhältnis zwischen den umzusetzenden Reaktionskomponenten betrug also 1 : 0,2 : 1.
Durchführung wie im Beispiel 1, mit dem Unterschied, daß eine Reaktionszeit von 28 Stunden eingehalten wurde. Es lag ein braun gefärbtes, zähflüssiges Reaktionsprodukt vor. Viskosität des erhaltenen erfindungsgemäßen verzweigten Polyoxalkylenmischpolyesters: 4600 mPa • s bei 25 °C.

Beispiel 3

Ansatz: 263,0 g (0,40 mol) Talgfettamin mit 10 mol Ethylenoxid, 410,0 g (0,07 mol) Pentaerythritblockoxalkylat mit (im Mittel) 18,5 mol Propylenoxid als 1. Block und 7 mol Ethylenoxid als 2. Block pro acides H-Atom, 58,3 g (0,40 mol) Adipinsäure und 5 ml 85 gew.-%ige ortho-Phosphorsäure als Katalysator. Das Molverhältnis zwischen den umzusetzenden Reaktionskomponenten betrug also 1 : 0,18 : 1.
Durchführung wie im Beispiel 1, mit dem Unterschied, daß eine Reaktionszeit von 12 Stunden eingehalten wurde. Es lag ein braun gefärbtes, zähflüssiges Reaktionsprodukt vor. Viskosität des erhaltenen erfindungsgemäßen verzweigten Polyoxalkylenmischpolyesters: 10 600 mPa • s bei 25 °C.

Beispiel 4

Ansatz: 148,0 g (0,40 mol) Talgfettamin mit 2 mol Ethylenoxid, 704,0 g (0,14 mol) Pentaerythritblockoxalkylat analog Beispiel 3 mit 16 mol Propylenoxid und 6,5 mol Ethylenoxid, 70,2 g (0,48 mol) Adipinsäure und 2 ml Methansulfonsäure als Katalysator. Das Molverhältnis zwischen den umzusetzenden Reaktionskomponenten betrug also 1 : 0,35 : 1,2.
Durchführung wie im Beispiel 1, mit dem Unterschied, daß eine Reaktionstemperatur von 160 °C und eine Reaktionszeit von 12 Stunden eingehalten wurde. Der erhaltene braun gefärbte, zähflüssige erfindungsgemäße verzweigte Polyoxalkylenmischpolyester hatte eine Viskosität von 4800 mPa • s bei 25 °C.

Beispiel 5

Ansatz: 150,0 g (0,5 mol) Cocosfettamin mit 2 mol Ethylenoxid, 519,0 g (0,13 mol) Trimethylolpropanblockoxalkylat mit 19 mol Propylenoxid als 1. Block und 5,3 mol Ethylenoxid als 2. Block pro acides H-Atom, 46,6 g (0,48 mol) Maleinsäureanhydrid und 3,5 ml Methansulfonsäure als Katalysator. Das Molverhältnis zwischen den umzusetzenden Reaktionskomponenten betrug also 1 : 0,25 : 0,95.
Durchführung wie im Beispiel 1, mit dem Unterschied, daß zunächst 1 Stunde lang bei nur 140 °C ohne Vakuum gehalten wurden, um Sublimation des Maleinsäureanhydrids zu vermeiden, und daß anschließend unter Wasserstrahlvakuum 160 °C 8 Stunden lang eingehalten wurden. Der erhaltene braun gefärbte, zähflüssige erfindungsgemäße verzweigte Polyoxalkylenmischpolyester hatte eine Viskosität von 28 000 mPa • s bei 25 °C.

Beispiel 6

Ansatz: 119,0 g (0,2 mol) Stearylamin mit 8 mol Ethylenoxid, 520,0 g (0,1 mol) Ethylendiaminblockoxalkylat mit (im Mittel) 18,8 mol Propylenoxid als 1. Block und 5,0 mol Ethylenoxid als 2. Block pro acides H-Atom, 19,6 g (0,2 mol) Maleinsäureanhydrid und 4 ml 37 gew.-%ige Salzsäure und 1 ml 50 gew.-%ige unterphosphorige Säure als Katalysator. Das Molverhältnis zwischen den einzusetzenden Reaktionskomponenten betrug also 1 : 0,5 : 1.
Durchführung wie im Beispiel 5. Es lag ein braun gefärbtes, zähflüssiges Reaktionsprodukt vor. Viskosität des so erhaltenen erfindungsgemäßen verzweigten Polyoxalkylenmischpolyesters: 30 000 mPa • s bei 25 °C.

Beispiel 7

Ansatz: 252,0 g (0,40 mol) Cocosfettamin mit 10 mol Ethylenoxid, 418,0 g (0,08 mol) Ethylendiaminblockoxalkylat wie im Beispiel 6, 73,1 g (0,44 mol) Phthalsäure und 3,4 ml Methansulfonsäure und 1 ml 50 gew.-%ige unterphosphorige Säure als Katalysator. Das Molverhältnis zwischen den einzusetzenden Reaktionskomponenten betrug also 1 : 0,2 : 1,1.
Durchführung wie im Beispiel 1, mit dem Unterschied, daß eine Reaktionstemperatur von 170 °C und eine Reaktionszeit von 18 Stunden eingehalten wurde. Der erhaltene braun gefärbte, zähflüssige erfindungsgemäße verzweigte Polyoxalkylenmischpolyester hatte eine Viskosität von 6 800 mPa • s bei 25 °C.

Beispiel 8

Ansatz: 263,0 g (0,40 mol) Talgfettamin mit 10 mol Ethylenoxid, 310,0 g (0,04 mol) Tetraethylenpentaminblockoxalkylat mit 15,0 mol Propylenoxid als 1. Block und 6 mol Ethylenoxid als 2. Block pro acides H-Atom, 63,1 g (0,38 mol) Phthalsäure und 3,3 ml 37 gew.-%ige Salzsäure und 1 ml 50 gew.-%ige unterphosphorige Säure als Katalysator. Das Molverhältnis zwischen den einzusetzenden Reaktionskomponenten betrug also 1 : 0,1 : 0,95.
Durchführung wie im Beispiel 7, mit dem Unterschied, daß eine Reaktionszeit von 12 Stunden eingehalten wurde. Es lag ein braun gefärbtes, zähflüssiges Reaktionsprodukt vor. Viskosität des erhaltenen erfindungsgemäßen verzweigten Polyoxalkylenmischpolyesters: 20 600 mPa • s bei 25 °C.

Wenn auch die Oxalkylierung von acide H-Atome tragenden Verbindungen,wie Fettaminen, Alkanolen und Polyaminen, schon seit langem wohlbekannt ist, sei hier dennoch die Bereitung der gemäß Erfindung einzusetzenden oxalkylierten Fettamine, Alkanole und oxalkylierten Polyamine kurz beschrieben: Die Oxalkylierung der in Rede stehenden Verbindungen wird im allgemeinen in der Weise durchgeführt, daß die Verbindung in Gegenwart von einem basischen Katalysator, vorzugsweise Kaliumhydroxid oder Natriumhydroxid, in einer Menge von etwa 0,1 bis 5 Gew.-%, bezogen auf die Gewichtsmenge der zu oxalkylierenden Verbindung, bei einer Temperatur von 100 bis 150 °C mit dem Oxalkylierungsmittel, das heißt Ethylenoxid und/oder Propylenoxid, beaufschlagt wird, wobei sich der aus den Reaktionskomponenten bei der Reaktionstemperatur ergebende Druck einstellt. Das Ende der Reaktion ist beispielsweise am abgenommenen und konstant bleibenden Druck erkennbar. Die oxalkylierte Verbindung kann, sofern es gewünscht wird, vom Katalysator beispielsweise durch Waschen mit Wasser befreit werden.

Die erfindungsgemäßen verzweigten Polyoxalkylenmischpolyester der Beispiele 1 bis 8 wurden anhand verschiedener Rohölemulsionen getestet. Die Testergebnisse sind in den folgenden Tabellen I und II zusammengefaßt. Sie zeigen die hohe demulgierende Wirkung der erfindungsgemäßen Produkte.

TABELLE I

| | |
|---|---|
| Ursprung der Rohölemulsion: | Emsland (Bundesrepublik Deutschland) |
| Wassergehalt der Rohölemulsion: | 56,5 Vol-% |
| Salzgehalt der Rohölemulsion: | 9,46 Gew.-% |
| Demulgiertemperatur: | 48 °C |
| Dosiermenge: | 28 ppm |

| Produkt von Beispiel | Wasserseparation in Vol.-% nach Stunden | | | | | | | Restsalzgehalt in Gew.-% in der Ölphase |
|---|---|---|---|---|---|---|---|---|
| | 1 | 3 | 6 | 9 | 12 | 18 | 24 | |
| 1 | 31 | 48 | 64 | 82 | 98 | 99 | 100 | 0,04 |
| 2 | 3 | 40 | 79 | 88 | 96 | 98 | 99 | 0,06 |
| 3 | 58 | 59 | 61 | 64 | 73 | 100 | 100 | 0,01 |
| 4 | 3 | 6 | 9 | 95 | 98 | 99 | 100 | 0,02 |
| 5 | 8 | 11 | 14 | 41 | 83 | 99 | 100 | 0,02 |
| Blindwert | 0 | 0 | 0 | 0 | 0 | 0 | 0 | 5,63 |

**T A B E L L E II**

| | |
|---|---|
| Ursprung der Rohölemulsion: | Borneo |
| Wassergehalt der Rohölemulsion: | 26,8 Vol.-% |
| Demulgiertemperatur: | 38 °C |
| Dosiermenge: | 34 ppm |

| Produkt von Beispiel | Wasserseparation in Vol.-% nach Minuten | | | | | | | Restwassergehalt in Vol.-% in der Ölphase |
|---|---|---|---|---|---|---|---|---|
| | 10 | 20 | 30 | 60 | 90 | 120 | 180 | |
| 3 | 62 | 66 | 72 | 80 | 93 | 98 | 100 | 0,08 |
| 5 | 30 | 38 | 44 | 59 | 88 | 98 | 99 | 0,18 |
| 6 | 41 | 48 | 57 | 73 | 85 | 95 | 99 | 0,20 |
| 7 | 43 | 64 | 83 | 97 | 98 | 99 | 100 | 0,14 |
| 8 | 5 | 58 | 83 | 98 | 99 | 100 | 100 | 0,06 |
| Blindwert | 0 | 0 | 0 | 0 | 0 | 0 | 0 | 4,85 |

## Ansprüche

1. Verzweigte Polyoxalkylenmischpolyester, dadurch gekennzeichnet, daß sie hergestellt worden sind, indem ein oxalkyliertes primäres Fettamin der Formel

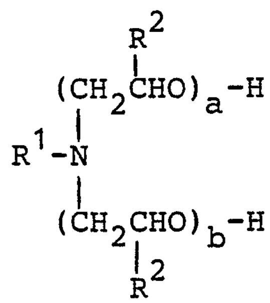

worin

$R^1$ ein Alkylrest oder Alkylenrest mit 8 bis 23 C-Atomen ist,

$R^2$ H oder $CH_3$ ist und innerhalb der Kette des Polyoxalkylenrestes, in Blöcken geordnet, auch beide Bedeutungen annehmen kann, und

a und b, gleich oder verschieden, ganze oder gebrochene Zahlen von insgesamt 2 bis 30 sind,

mit der Maßgabe, daß weder a noch b Null ist, und ein mindestens 3wertiges Alkanol oder ein Polyamin, die jeweils pro acides H-Atom 5 bis 30 Ethylenoxid-Einheiten, 5 bis 30 Propylenoxid-Einheiten oder 3 bis 20 Ethylenoxid-Einheiten und 5 bis 30 Propylenoxid-Einheiten enthalten, mit einer Dicarbonsäure oder einem Dicarbonsäureanhydrid unter Polykondensation verestert worden sind, wobei das oxalkylierte Fettamin, das oxalkylierte, mehrwertige Alkanol oder das oxalkylierte Polyamin und die Dicarbonsäure oder das Dicarbonsäureanhydrid im Molverhältnis von 1 : 0,01 : 0,5 bis 1 : 1 : 3 eingesetzt worden sind.

2. Verzweigte Polyoxalkylenmischpolyester nach Anspruch 1, dadurch gekennzeichnet, daß das 3wertige Alkanol und das Polyamin pro acides H-Atom 15 bis 25 Ethylenoxid-Einheiten, 15 bis 25 Propylenoxid-Einheiten oder 5 bis 15 Ethylenoxid-Einheiten und 15 bis 25 Propylenoxid-Einheiten enthält, wobei das Alkanol Glycerin, Erythrit, Pentaerythrit, Trimethylolethan, Trimethylolpropan, 1,3,5-Hexantriol, ein Pentit oder ein Hexit ist und das Polyamin Ethylendiamin, Diethylentriamin, Triethylentetramin, Tetraethylenpentamin, Pentaethylenhexamin oder ein entsprechendes Propylenpolyamin ist, und daß die Dicarbonsäure Malonsäure, Bernsteinsäure, Glutarsäure, Adipinsäure, Pimelinsäure, Suberinsäure, Acelainsäure, Sebacinsäure, Fumarsäure, Maleinsäure oder die Phthalsäure ist und das Dicarbonsäureanhydrid ein Anhydrid der genannten Dicarbonsäuren ist.

3. Verzweigte Polyoxalkylenmischpolyester nach Anspruch 1, dadurch gekennzeichnet, daß das 3wertige Alkanol und das Polyamin pro acides H-Atom 15 bis 25 Ethylenoxid-Einheiten, 15 bis 25 Propylenoxid-Einheiten oder 5 bis 15 Ethylenoxid-Einheiten und 15 bis 25 Propylenoxid-Einheiten enthält, wobei das Alkanol Glycerin, Pentaerythrit oder Trimethylolpropan ist und das Polyamin Ethylendiamin, Diethylentriamin, Triethylentetramin, Tetraethylenpentamin oder ein entsprechendes Propylenpolyamin ist, und daß die Dicarbonsäure Bernsteinsäure, Glutarsäure, Adipinsäure, Maleinsäure oder die Phthalsäure ist und das Dicarbonsäureanhydrid ein Anhydrid der genannten Dicarbonsäuren ist.

4. Verzweigte Polyoxalkylenmischpolyester nach Anspruch 1, dadurch gekennzeichnet, daß als oxalkyliertes Fettamin ein solches eingesetzt wird, das sich ergibt, wenn $R^1$ ein Alkylrest mit 12 bis 18 C-Atomen ist, $R^2$ H ist und a und b, gleich oder verschieden, ganze oder gebrochene Zahlen von insgesamt 2 bis 15 sind, als oxalkyliertes 3wertiges Alkanol Glycerin, Pentaerythrit oder Trimethylolpropan mit einem ersten Block aus 15 bis 25 Propylenoxid-Einheiten und einem daran anschließenden Block aus 5 bis 15 Ethylenoxid-Einheiten, als oxalkyliertes Polyamin Ethylendiamin, Diethylentriamin, Triethylentetramin, Tetraethylenpentamin oder ein entsprechendes Propylenpolyamin mit einem ersten Block aus 15 bis 25 Propylenoxid-Einheiten und einem daran anschließenden Block aus 5 bis 15 Ethylenoxid-Einheiten und als Dicarbonsäure oder Dicarbonsäureanhydrid Bernsteinsäure, Glutarsäure, Adipinsäure, Maleinsäure oder die Phthalsäure bzw. ein Anhydrid dieser Dicarbonsäuren eingesetzt wird.

5. Verzweigte Polyoxalkylenmischpolyester nach einem oder mehreren der Ansprüche 1 bis 4, dadurch gekennzeichnet, daß das Fettamin, das Alkanol oder das Polyamin und die Dicarbonsäure oder Dicarbonsäureanhydrid im Molverhältnis von 1 : 0,1 : 0,9 bis 1 : 0,5 : 1,5 eingesetzt werden.

6. Verzweigte Polyoxalkylenmischpolyester nach einem oder mehreren der Ansprüche 1 bis 5, dadurch gekennzeichnet, daß die Veresterungsreaktion in der Schmelze bei einer Temperatur von 160 bis 180 °C und in Gegenwart eines saueren Veresterungskatalysators unter Austragung des Reaktionswassers durchgeführt wird.

7. Verwendung der verzweigten Polyoxalkylenmischpolyester gemäß Anspruch 1 als Demulgatoren zum Spalten von Rohölemulsionen.